# FASCICULE DE BREVET EUROPEEN

(11) **EP 2 121 295 B1**
(45) Date de publication et mention de la délivrance du brevet: **18.08.2010**
(21) Numéro de dépôt: 08775635.9
(22) Date de dépôt: 07.03.2008
(51) Int. Cl.: B29D 99/00

(54) **PROCEDE DE REALISATION DE RAIDISSEURS EN MATERIAU COMPOSITE**
VERFAHREN ZUR HERSTELLUNG VON VERSTEIFUNGEN AUS EINEM VERBUNDWERKSTOFF
METHOD FOR MAKING STIFFENERS OF A COMPOSITE MATERIAL

(30) Priorité: 16.03.2007 FR 0701947
(43) Date de publication de la demande: 25.11.2009
(73) Titulaire: Messier-Dowty SA, 78140 Velizy Villacoublay (FR)
(72) Inventeur: DUNLEAVY, Patrick, F-91120 Palaiseau (FR)
(74) Mandataire: Parzy, Benjamin Alain
(86) Numéro de dépôt international: PCT/FR2008/000300
(87) Numéro de publication internationale: WO 2008/132319

(56) Documents cités:
- EP-A- 0 056 352
- EP-A- 1 023 986
- US-A- 4 622 254
- US-A- 4 966 802
- US-A- 5 518 564

## Description

La présente invention concerne des éléments de raidissement en matériau composite pour éléments de structure minces tels que des panneaux, en particulier pour l'aéronautique.

### ARRIERE-PLAN DE L'INVENTION

Les avions ou les hélicoptères comportent des éléments de structure minces d'une dimension qui peut être assez importante, devant résister à des contraintes mécaniques variées pouvant s'exercer dans différentes directions, tout en étant les plus légères possibles.

Il est connu de réaliser de tels éléments de structure mince à partir de plaques de fibres telles que des fibres de carbone, de verre ou encore d'aramide. Dans les plaques, les fibres sont assemblées en couches ou plis assemblés entre eux notamment par tissage. Les plaques possèdent ainsi une certaine tenue permettant des découpes et des manipulations. Des portions sont découpées dans ces plaques puis mises en forme assemblée, et imprégnées d'une résine polymérisable pour obtenir l'élément de structure.

Un moyen bien connu de conférer de la raideur aux éléments minces de structure tout en minimisant la masse de ces éléments minces consiste à y rapporter des raidisseurs.

L'art antérieur est notamment illustré par les documents US 462254, EP 1 023 986, EP 0 056 352, US 5 518 564 et US 4 966 802.

### OBJET DE L'INVENTION

L'invention vise à proposer un moyen très simple de réaliser des raidisseurs à partir de plaques minces similaires à celles utilisées pour réaliser les éléments de structure minces.

### BREVE DESCRIPTION DE L'INVENTION

A cet effet, on propose un procédé de réalisation d'au moins un élément de raidissement selon la revendication 1, comportant les étapes de :
- découper dans des plaques de fibres deux flancs allongés sensiblement identiques présentant de part et d'autre d'une partie centrale deux excroissances latérales ;
- superposer les flancs et les coudre entre eux le long de deux lignes parallèles qui séparent les excroissances latérales des parties centrales ;
- rabattre les excroissances le long des lignes de couture de part et d'autre de l'ensemble ainsi formé.

Les excroissances latérales ainsi rabattues forment des nervures de renfort de l'élément de raidissement qui s'étendent deux à deux dans deux plans parallèles de façon à former deux semelles de part et d'autre d'une âme de l'élément de raidissement constituée par les parties centrales des flancs. Les lignes de couture constituent ainsi des lignes de pliage naturelles. Ces lignes de couture s'étendent donc à la base desdites nervures et constituent le point de fixation des nervures sur le raidisseur, ce qui apporte une bonne cohésion et une résistance à l'endommagement accrue, ainsi qu'une plus grande rigidité à la pièce.

L'invention se rapporte également à un procédé selon la revendication 5.

### BREVE DESCRIPTION DES DESSINS

L'invention sera mieux comprise et d'autres caractéristiques et avantages apparaîtront plus clairement à la lecture de la description ci-après donnée à titre d'exemple en référence aux dessins annexés dans lesquels :
- la figure 1 est une vue en perspective de deux flancs découpés dans des plaques de fibres et assemblées par des coutures en vue de la réalisation d'un élément de raidissement selon un mode particulier de mise en oeuvre de l'invention;
- la figure 2 est une vue en perspective des deux flancs de la figure 1 après pliage ;
- la figure 3 est une vue perspective d'un élément de raidissement en cours de réalisation selon une variante de réalisation ;
- la figure 4 est une vue de face partielle de l'élément de raidissement de la figure 3 ;
- la figure 5 est une vue perspective d'éléments de raidissement assemblés selon un mise en oeuvre particulière de l'invention ;
- la figure 6 est une vue en perspective des éléments de raidissement de la figure 5, illustrés après pliage ;
- la figure 7 est une vue de face d'un panneau muni d'un réseau de raidisseurs ;
- la figure 8 présente ce panneau en coupe selon la ligne VIII-VIII de la figure 7 ;
- la figure 9 est une vue en perspective d'un renfort pour des raidisseurs assemblés.

### DESCRIPTION DETAILLEE DE L'INVENTION

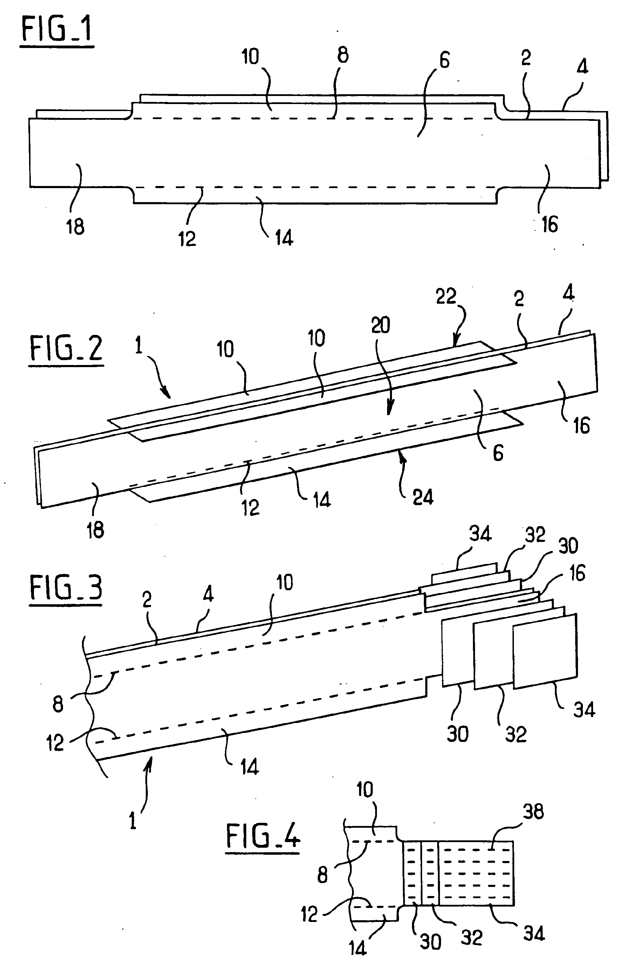

La figure 1 illustre la réalisation d'un élément de raidissement en forme de raidisseur allongé. La fabrication commence par le découpage dans une plaque de fibres de deux flancs identiques 2, 4 découpés selon une forme longiligne. On utilisera de préférence des plaques constituées d'une superposition de plis reliés entre eux par une liaison apte à conférer aux plis une cohésion qui facilite la manipulation des flancs ainsi découpés, par exemple un tissage ou une couture interplis. Les fibres pourront être des fibres de verre, de carbone, ou encore d'aramide.

Les flancs 2, 4 comportent une partie centrale 6 qui forme une bande rectangulaire s'étendant sur toute la longueur de chaque flanc. La partie centrale 6 est bordée partiellement sur ses grands côtés et de manière symétrique par deux excroissances latérales 10, 14 formant des bandes rectangulaires de largeur réduite. Ces excroissances latérales 10, 14 s'arrêtent avant les extrémités de la partie centrale 6, ce qui définit sur cette dernière deux extrémités libres 16, 18, ici de longueurs identiques.

Les flancs 2, 4 sont superposés et cousus ensemble par deux coutures 8, 12 rectilignes parallèles qui s'étendent sur chaque flanc le long de la partie centrale 6 et qui séparent cette partie des excroissances latérales 10, 14.

La figure 2 représente les plaques 2, 4 dans une étape suivante de fabrication. Les excroissances latérales 10, 14 sont pliées ici à angle droit, suivant les coutures 8, 12, de part et d'autre des parties centrales 6, de sorte que les excroissances latérales 10 des deux flancs s'étendent dans un même plan, de même que les excroissances latérales 14 s'étendent dans un même plan. On réalise ainsi des semelles 22, 24 de forme symétrique par rapport au plan de contact entre les deux flancs 2, 4, les semelles 22,24 s'étendant de part et d'autre d'une âme du raidisseur constituée par les parties centrales des flancs.

L'assemblage ainsi réalisé est alors imprégné de résine, par exemple par un procédé de transfert bien connu tel que l'injection de résine sous pression ou l'infiltration sous vide. La résine est ensuite durcie ici par polymérisation.

La section transversale du raidisseur 1 a une forme générale en I, les deux parties centrales 6 accolées des plaques 2, 4 formant l'âme 20 du raidisseur, les excroissances latérales 10, 14 formant les semelles 22, 24 du raidisseur. Cette section en I bien connue permet de réaliser des raidisseurs en forme de poutrelles ayant une bonne résistance à différentes contraintes mécaniques, en particulier une résistance à la flexion, tout en utilisant un minimum de matière ce qui permet de limiter le poids et les coûts de réalisation.

On notera que le raidisseur 1 suivant l'invention possède une bonne cohésion, les deux parties symétriques formées par les deux flancs 2, 4 étant liées entre elles sur la longueur par les coutures 8, 12 qui apportent des fibres de renfort, elles-mêmes imprégnées de résine, suivant une direction perpendiculaire à l'âme 20. Le type de couture peut être adapté pour ajouter plus ou moins de fibres suivant cette direction.

De plus les coutures 8, 12 sont réalisées le long du bord de l'âme 20, à la base des semelles 22, 24 là où les contraintes sont élevées, et suivant deux lignes fortement espacées ce qui donne la meilleure rigidité à l'ensemble.

Les figure 3 et 4 représentent un raidisseur suivant une variante de réalisation, en cours de fabrication à partir de deux flancs 2, 4 similaires à ceux de la figure 1 qui sont assemblées par deux coutures 8, 12.

Les extrémités libres 16 de chaque flanc 2, 4, accolées dos-à-dos, sont ici recouvertes sur leur face extérieure avant l'opération de pliage par des premier, deuxième et troisième éléments de renfort 30, 32, 34 également découpés dans une plaque de fibres.

Les éléments de renfort 30, 32, 34 ont une forme rectangulaire ajustée pour trois côtés sur le contour extérieur des extrémités 16. Le quatrième côté tourné vers la partie centrale des flancs 2, 4 se termine pour le premier élément de renfort 30 sensiblement au niveau de l'extrémité des excroissances latérales 10, 14. Le quatrième côté du deuxième élément renfort 32 et le quatrième côté du troisième élément de renfort 34 sont successivement décalés de manière à former une section en escalier qui a une épaisseur croissante vers l'extrémité des flancs 2, 4.

Les deux jeux de trois renforts 30, 32, 34 ainsi que les plaques support 2, 4 sont cousus ensemble dans leur épaisseur suivant plusieurs lignes de couture 38 qui partent du plus grand renfort 30, pour tenir l'ensemble tout en ajoutant des fibres de renfort suivant une direction perpendiculaire au plan. Un élément de liaison pourra être fixée sur l'extrémité 16 du raidisseur 1, par exemple en perçant l'extrémité 16 et en rapportant dans le perçage ainsi réalisé un élément de liaison en métal. Un éventuel moment de flexion exercé par la liaison est alors transmis progressivement à l'âme 20 du raidisseur par la variation régulière de l'épaisseur des renforts 30, 32, 34. L'élément de liaison peut être par exemple une chape articulée, montée en bout du raidisseur utilisé comme un bras de liaison.

Bien sûr, on pourra moduler le nombre d'éléments de renfort en fonction de l'épaisseur que l'on souhaite obtenir. On pourra également, si aucun élément de fixation ne doit être rapporté sur le raidisseur, supprimer l'une, voire les deux extrémités libres du raidisseur.

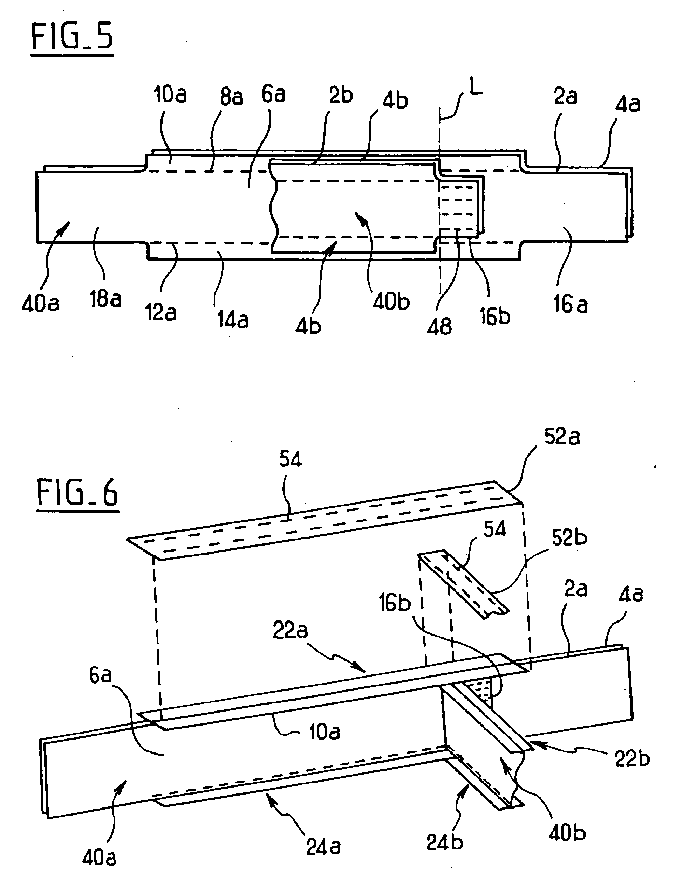

Les figures 5 et 6 présentent une méthode d'assemblage en vue par exemple de former un élément de raidissement en forme de réseau. Une première ébauche de raidisseur 40a en cours de réalisation suivant le procédé présenté précédemment, comporte deux flancs 2a, 4a cousus entre eux, les excroissances latérales 10a, 14a n'étant pas encore pliées.

Une deuxième ébauche de raidisseur 40b de largeur sensiblement identique est elle aussi en cours d'assemblage, elle comporte de la même manière deux flancs 2b, 4b cousus entre eux. Les excroissances latérales ne sont pas encore pliées.

Les deux ébauches de raidisseurs 40a, 40b sont superposées longitudinalement et à plat l'une sur l'autre, leurs parties centrales se recouvrant au moins partiellement. L'extrémité libre 16b de la deuxième ébauche de raidisseur 40b est posée sur la partie centrale 6a de la première ébauche de raidisseur 40a. Des coutures 48 sont alors effectuées pour lier l'extrémité libre 16b de la deuxième ébauche de raidisseur 40b à la partie centrale 6a de la première ébauche de raidisseur 40a. Cette opération est facilitée par le fait que toutes les flancs superposés sont encore plans.

Comme cela est visible à la figure 6, la deuxième ébauche de raidisseur 40b est ensuite pliée, ici à angle droit par rapport à la première ébauche de raidisseur 40a le long d'une ligne de pliage L délimitant l'extrémité cousue 16b du reste du deuxième raidisseur 40b. Puis les excroissances latérales 10a, 14a, 10b, 14b de chaque ébauche de raidisseur sont pliées à leur tour comme présenté précédemment pour constituer des semelles 22a,22b. On obtient ainsi un réseau de raidissement constitué de deux raidisseurs reliés entre eux.

En choisissant une largeur identique pour les parties centrales 6a,6b de chaque raidisseur 40a, 40b, les semelles 22a et 22b des deux raidisseurs s'étendent dans un même plan. De plus, en effectuant le pliage du deuxième raidisseur 40b selon la ligne de pliage L, on obtient une continuité des semelles 22a,22b qui se prolongent d'un raidisseur à l'autre.

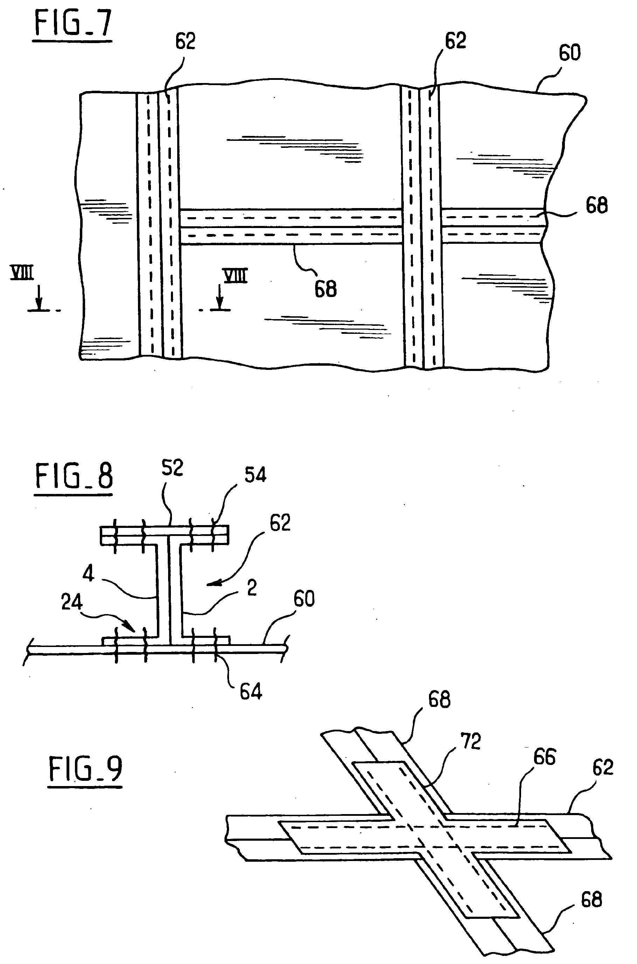

Selon un aspect particulier de l'invention, on renforce les raidisseurs en ajoutant des bandes de renfort 52a, 52b découpées dans des plaques de fibres, qui s'ajustent sur les semelles 22a,22b des raidisseurs. Dans l'exemple illustré à la figure 6, une bande de renfort 52a recouvre la semelle 22a du premier raidisseur 40a, tandis qu'une bande de renfort 52b recouvre la semelle 22b du deuxième raidisseur 40b. Les bandes de renfort sont cousues sur les semelles 22a, 22b par des coutures 54, que l'on aperçoit également à la figure 8. On notera qu'ici, les bandes de renfort 52a, 52b se recouvrent au niveau de la jonction entre les raidisseurs 40a, 40b, ce qui concourt à renforcer cette liaison.

La figure 7 présente plusieurs raidisseurs 62, 68 assemblés entre eux suivant la technique présentée précédemment, pour former un élément de raidissement en forme de réseau maillé destiné à raidir un panneau 60 découpé dans une plaque de fibres et mis en forme, par exemple dans un gabarit ou un moule. Le réseau de raidissement ainsi réalisé est posé sur le panneau, les semelles en contact avec le panneau sont cousues sur celui-ci.

La figure 8 présente l'assemblage d'un des raidisseurs 62 du réseau de raidissement sur le panneau 60. Des coutures 64 lient la semelle inférieure 24 du raidisseur au panneau 60. Toutes les semelles de tous les raidisseurs composant le réseau de raidissement sont bien sûr cousues au panneau 60.

En utilisant les mêmes matériaux pour la peau 60, et les raidisseurs 62, 68, on assure une bonne homogénéité de l'ensemble, les liaisons se faisant entre des matériaux similaires.

La figure 9 présente un autre type de bande de renfort 72 en forme de croix, qui recouvre simultanément la semelle supérieure du premier raidisseur 62 ainsi que la semelle supérieure de deux raidisseurs 68 alignés s'étendant de part et d'autre du premier raidisseur 62. Des coutures 66 viennent ensuite lier la bande en croix 72 aux semelles des raidisseurs 62, 68. Ce renfort est particulièrement adapté pour renforcer les croisements du réseau maillé présenté à la figure 7.

L'ensemble constitué du réseau de raidissement et du panneau ainsi réalisé est alors imprégné de résine, par exemple par un procédé de transfert bien connu, puis polymérisé.

On obtient ainsi un panneau raidi, dont les coutures améliorent grandement sa tolérance aux dommages. En effet, les coutures empêchent les raidisseurs de se désagréger ou de se séparer du panneau, par exemple en cas de choc conduisant à un délaminage de la résine au niveau de l'interface entre le panneau et le réseau' de raidissement.

D'une manière générale, les coutures peuvent être réalisées de différentes manières, en particulier en utilisant le point « stitching tufting », et le nombre de coutures peut être adapté pour réaliser un renforcement particulier des liaisons. On utilisera de préférence le même type de fibres que celui qui compose les flancs et les bandes de renfort.

De plus, l'orientation des fibres de renfort pour les raidisseurs peut être adaptée pour privilégier telle ou telle direction du raidisseur en fonction de la direction des contraintes subie par le raidisseur, afin améliorer la résistance mécanique, comme cela est bien connu.

## Revendications

1. Procédé de réalisation d'au moins un élément de raidissement, comportant les étapes de :
- découper dans des plaques de fibres deux flancs (2, 4) allongés sensiblement identiques présentant de part et d'autre d'une partie centrale (6) deux excroissances latérales (10, 14);
- superposer les flancs (2, 4) et les coudre entre eux le long de deux lignes (8, 12) parallèles qui séparent les excroissances latérales des parties centrales ;
- rabattre les excroissances latérales (10, 14) le long des lignes de couture de part et d'autre de l'ensemble ainsi formé pour former des semelles (22, 24).

2. Procédé selon la revendication 1, dans lequel les parties centrales (6) de flancs se prolongent au delà des excroissances latérales pour définir au moins une extrémité libre (16, 18) de l'élément de raidissement.

3. Procédé selon la revendication 2, dans lequel on coud sur l'extrémité libre au moins un élément de renfort (30, 32, 34) découpé dans une plaque de fibres et cousu à l'extrémité libre.

4. Procédé selon la revendication 3, dans lequel on coud plusieurs éléments de renfort (30, 32, 34) de part et d'autre de l'extrémité libre.

5. Procédé de réalisation d'un élément de raidissement, comportant les étapes de:
- découper dans des plaques de fibres deux flancs (2a, 4a) allongés sensiblement identiques présentant de part et d'autre,d'une partie centrale (6a) deux excroissances latérales (10a, 14a);
- superposer les flancs (2a, 4a) et les coudre entre eux le long de deux lignes (8a, 12a) qui séparent les excroissances latérales des parties centrales pour obtenir une première ébauche de raidisseur (40a);
- découper dans des plaques de fibres deux autres flancs (2b, 4b) allongés sensiblement identiques présentant de part et d'autre d'une partie centrale (6b) deux excroissances latérales (10b, 14b), les flancs présentant au moins une extrémité libre (16b);
- superposer les flancs (2b, 4b) et les coudre entre eux le long de deux lignes (8b, 12b) qui séparent les excroissances latérales des parties centrales pour obtenir une deuxième ébauche de raidisseur (40b);
- superposer les deux ébauches de raidisseurs de sorte que l'extrémité libre (16b) de la deuxième ébauche de raidisseur (40b) soit en regard de la partie centrale (6a) de la première ébauche de raidisseur (40a);
- coudre l'extrémité libre (16b) de la deuxième ébauche de raidisseur à la partie centrale de la première ébauche de raidisseur;
- rabattre la deuxième ébauche de raidisseur (40b) de sorte qu'elle s'étende transversalement à la première ébauche de raidisseur;
- rabattre à angle droit les excroissances latérales (10a, 14a, 10b, 14b) le long des lignes de couture (8a, 12a, 8b, 12b) de sorte que les excroissances latérales forment des semelles (22a, 24a, 22b, 24b).

6. Procédé selon la revendication 5, dans lequel on coud sur les semelles des bandes de renfort (52a, 52b) découpées dans une plaque de fibres.

7. Procédé selon la revendication 6, dans lequel les bandes de renfort (52a, 52b) se croisent au niveau d'une jonction de l'élément de raidissement.

8. Procédé selon la revendication 5, dans lequel on coud une croix de renfort (72) découpée dans une plaque de fibres sur les semelles au niveau d'une jonction de l'élément de raidissement.

9. Procédé de réalisation d'un panneau raidi, comportant les étapes de :
- découper dans une plaque de fibre un panneau (60);
- réaliser un élément de raidissement selon la revendication 1 ou selon la revendication 5;
- rapporter l'élément de raidissement sur le panneau et coudre les semelles de l'élément de raidissement en regard du panneau avec ce dernier.

## Claims

1. A method of making at least one stiffener element, the method comprising the steps of:
· cutting out two substantially identical elongate flanks (2, 4) from fiber plates, each flank presenting two lateral projections (10, 14) on either side of a central portion (6);
· superposing the flanks (2, 4) and stitching them together along two parallel lines (8, 12) that mark the boundaries between the lateral projections and the central portions; and
· folding the lateral projections (10, 14) along the lines of stitching to either side of the assembly as formed in this way in order to form flanges (22, 24).

2. A method according to claim 1, wherein the central portions (6) of the flanks extend beyond the lateral projections in order to define at least at one free end (16, 18) of the stiffener element.

3. A method according to claim 2, wherein at least one reinforcing element (30, 32, 34) cut out from a fiber plate is stitched on the free end and is stitched at the free end.

4. A method according to claim 3, wherein a plurality of reinforcing elements (30, 32, 34) are stitched on either side of the free end.

5. A method of making a stiffener element, the method comprising the steps of:
· cutting out two substantially identical elongate flanks (2a, 4a) from fiber plates, each flank presenting two lateral projections (10a, 14a) on either side of a central portion (6a);
· superposing the flanks (2a, 4a) and stitching them together along two parallel lines (8a, 12a) that mark the boundaries between the lateral projections and the central portions in order to obtain a first stiffener blank (40a);
· cutting out two substantially identical elongate flanks (2b, 4b) from fiber plates, each flank presenting two lateral projections (10b, 14b), on either side of a central portion (6b), the flanks presenting at least one free end (16b);
· superposing the flanks (2b, 4b) and stitching them together along two parallel lines (8b, 12b) that mark the boundaries between the lateral projections and the central portions in order to obtain a second stiffener blank (40b);
· superposing the two stiffener blanks so that the free end (16b) of the second stiffener blank (40b) faces the central portion (6a) of the first stiffener blank (40a);
· stitching the free end (16b) of the second stiffener blank to the central portion of the first stiffener blank;
· folding the second stiffener blank (40b) in such a manner that it extends transversely relative to the first stiffener blank; and
· folding the lateral projections (10a, 14a, 10b, 14b) at right angles along the lines of stitching (8a, 12a, 8b, 12b) so that the lateral projections form flanges (22a, 24a, 22b, 24b).

6. A method according to claim 5, wherein reinforcing strips (52a, 52b) cut out from a fiber plate are sewn onto the flanges.

7. A method according to claim 6, wherein the reinforcing strips (52a, 52b) cross at a junction of the stiffener element.

8. A method according to claim 5, wherein a reinforcing cross (72) cut out from a fiber plate is sewn onto the flanges at a junction of the stiffener element.

9. A method of making a stiffened panel, the method comprising the steps of:
· cutting a panel (60) out from a fiber plate;
· making a stiffener element according to claim 1 or according to claim 5; and
· placing the stiffener element on the panel and stitching the flanges of the stiffener element that face the panel thereto.

## Patentansprüche

1. Verfahren zur Herstellung mindestens eines Versteifungselements, umfassend die Schritte:
- Schneiden von zwei länglichen, im Wesentlichen identischen Streifen (2, 4) aus Fasermatten, wobei die Streifen auf beiden Seiten eines zentralen Abschnittes (6) zwei seitliche Überstände (10, 14) aufweisen,
- Aufeinanderlegen der Streifen (2, 4) und Zusammennähen derselben entlang zweier paralleler Linien (8, 12), die die seitlichen Überstände von den zentralen Abschnitten trennen,
- Umklappen der seitlichen Überstände (10, 14) entlang der Nahtlinien auf beiden Seiten der so gebildeten Einheit, um Flansche (22, 24) auszubilden.

2. Verfahren nach Anspruch 1, wobei sich die zentralen Abschnitte (6) der Streifen jenseits der seitlichen Überstände fortsetzen, um mindestens ein freies Ende (16, 18) des Versteifungselements zu definieren.

3. Verfahren nach Anspruch 2, wobei auf das freie Ende mindestens ein Verstärkungselement (30, 32, 34) genäht wird, das aus einer Fasermatte geschnitten und an das freie Ende genäht wurde.

4. Verfahren nach Anspruch 3, wobei mehrere Verstärkungselemente (30, 32, 34) auf beiden Seiten des freien Endes angenäht wurden.

5. Verfahren zur Herstellung eines Versteifungselements, umfassend die Schritte:
- Schneiden von zwei länglichen, im Wesentlichen identischen Streifen (2a, 4a) aus Fasermatten, wobei die Streifen auf beiden Seiten eines zentralen Abschnittes (6a) zwei seitliche Überstände (10a, 14a) aufweisen,
- Aufeinanderlegen der Streifen (2a, 4a) und Zusammennähen derselben entlang zweier paralleler Linien (8a, 12a), die die seitlichen Überstände von den zentralen Abschnitten trennen, um einen ersten Versteifungsrohling (40a) zu erhalten,
- Schneiden von zwei weiteren länglichen, im Wesentlichen identischen Streifen (2b, 4b) aus Fasermatten, wobei die Streifen auf beiden Seiten eines zentralen Abschnittes (6b) zwei seitliche Überstände (10b, 14b) aufweisen, wobei die Streifen mindestens ein freies Ende (16b) haben,
- Aufeinanderlegen der Streifen (2b, 4b) und Zusammennähen derselben entlang zweier Linien (8b, 12b), die die seitlichen Überstände von den zentralen Abschnitten trennen, um einen zweiten Versteifungsrohling (40b) zu erhalten,
- Aufeinanderlegen der beiden Versteifungsrohlinge derart, dass sich das freie Ende (16b) des zweiten Versteifungsrohlings (40b) gegenüber dem zentralen Abschnitt (6a) des ersten Versteifungsrohlings (40a) befindet,
- Nähen des freien Endes (16b) des zweiten Versteifungsrohlings an den zentralen Abschnitt des ersten Versteifungsrohlings,
- Umklappen des zweiten Versteifungsrohlings (40b) derart, dass er sich quer zum ersten Versteifungsrohling erstreckt,
- Umklappen der seitlichen Überstände (10a, 14a, 10b, 14b) im rechten Winkel entlang der Nahtlinien (8a, 12a, 8b, 12b) derart, dass die seitlichen Überstände Flansche (22a, 24a, 22b, 24b) bilden.

6. Verfahren nach Anspruch 5, wobei auf die Flansche Verstärkungsbänder (52a, 52b) genäht werden, die aus einer Fasermatte geschnitten sind.

7. Verfahren nach Anspruch 6, wobei sich die Verstärkungsbänder (52a, 52b) im Bereich einer Verbindungsstelle des Versteifungselements kreuzen.

8. Verfahren nach Anspruch 5, wobei ein aus einer Fasermatte ausgeschnittenes Verstärkungskreuz (72) auf die Flansche im Bereich einer Verbindungsstelle des Versteifungselements genäht wird.

9. Verfahren zur Herstellung einer versteiften Platte, umfassend die Schritte:
- Schneiden einer Platte (60) aus einer Fasermatte,
- Herstellen eines Versteifungselements nach Anspruch 1 oder Anspruch 5,
- Befestigen des Versteifungselements an der Platte und Zusammennähen der Flansche des Versteifungselements, die der Platte gegenüberliegen, mit dieser letztgenannten.
